# EUROPEAN PATENT SPECIFICATION

(11) **EP 4 006 204 B1**
(45) Date of publication and mention of the grant of the patent: **09.12.2026**
(21) Application number: 20846179.8
(22) Date of filing: 22.07.2020
(51) Int. Cl.: C23F 1/28, H01M 4/66

(54) **COMPOSITION, METHOD FOR ROUGHENING STAINLESS STEEL SURFACE USING SAME, ROUGHENED STAINLESS STEEL, AND METHOD FOR PRODUCING SAID ROUGHENED STAINLESS STEEL**
ZUSAMMENSETZUNG, VERFAHREN ZUM AUFRAUHEN DER OBERFLÄCHE VON ROSTFREIEM STAHL UNTER VERWENDUNG DERSELBEN, AUFGERAUHTER ROSTFREIER STAHL UND VERFAHREN ZUR HERSTELLUNG DES AUFGERAUHTEN ROSTFREIEN STAHLS
COMPOSITION, PROCÉDÉ DE RUGOSIFICATION DE LA SURFACE EN ACIER INOXYDABLE FAISANT APPEL À CELLE-CI, ACIER INOXYDABLE RUGOSIFIÉ ET PROCÉDÉ DE PRODUCTION DUDIT ACIER INOXYDABLE RUGOSIFIÉ

(30) Priority: 30.07.2019 JP 2019139697
(43) Date of publication of application: 01.06.2022
(73) Proprietor: MITSUBISHI GAS CHEMICAL COMPANY, INC., Chiyoda-ku Tokyo 100-8324 (JP)
(72) Inventor: IKEDA, Kazuhiko, Ashigarakami-gun, Kanagawa 258-0112 (JP); FUJII, Tomoko, Ashigarakami-gun, Kanagawa 258-0112 (JP); MATSUNAGA, Hiroshi, Ashigarakami-gun, Kanagawa 258-0112 (JP); TAMAI, Satoshi, Ashigarakami-gun, Kanagawa 258-0112 (JP)
(74) Representative: Müller-Boré & Partner Patentanwälte PartG mbB
(86) International application number: PCT/JP2020/028359
(87) International publication number: WO 2021/020253

(56) References cited:
- EP-A2- 2 011 903
- CN-B- 104 149 480
- CN-B- 105 039 987
- JP-A- 2012 526 200
- JP-A- 2015 183 239
- JP-A- H04 246 177
- JP-A- H04 246 177
- JP-B1- S5 020 951
- JP-U- S58 124 468
- KR-B1- 101 715 106
- US-A1- 2017 029 958

## Description

### TECHNICAL FIELD

The present invention relates to a composition to be used for treating the surface of stainless steel, in particular in a method for roughening the surface of stainless steel.

### BACKGROUND ART

Recently, use of stainless steel in various fields has been examined because of its excellent durability and weather resistance. For example, use of stainless steel in electronic components, current collector foils for batteries and cases for automobile components has been promoted. Specifically, when using stainless steel in current collector foils for batteries and cases for automobile components, the surface of stainless steel is roughened for the purpose of adhering a dielectric material and an organic substance. Further, when using stainless steel for heat dissipation, the surface of stainless steel is roughened for the purpose of promoting heat dissipation.

When stainless steel is used in respective products for such applications, it is desired to increase the surface area. In this regard, for example, a method in which the surface of stainless steel is treated with a treatment solution containing iron chloride, etc. are known (e.g., Patent Document 1). However, according to this treatment method, many smooth portions exist even on the surface of stainless steel after the treatment, and therefore it cannot be necessarily said that stainless steel is adequately roughened to be used for the above-described applications.

As a method for roughening the surface of stainless steel, a method in which wet peening is combined with a roughening treatment using a chemical solution has been found (e.g., Patent Document 2), but according to the method, a plurality of steps are required. For this reason, there is a room for improvement with respect to promoting efficiency of the roughening treatment.

### PRIOR ART DOCUMENTS

### PATENT DOCUMENTS

Patent Document 1: Japanese Laid-Open Patent Publication No. 2011-168017
Patent Document 2: Japanese Laid-Open Patent Publication No. 2015-183239
CN 105 039 987 B describes a stainless steel etching solution composition.
CN 104 149 480 B describes a non-gel high-binding-force stainless steel and plastic complex preparation method.
KR 101 715 106 B1 describes an etching solution for exposure of grain size and a method for exposure of grain size using them.

### SUMMARY OF THE INVENTION

### PROBLEMS TO BE SOLVED BY THE INVENTION

As described above, in the conventional roughening treatment of the surface of stainless steel, the level of roughening is not necessarily sufficient, and the treatment time and the cost are increased because a complicated process is required. In such circumstances, it has been desired to develop a method by which the surface of stainless steel can be adequately roughened in an efficient manner with a simple process.

### MEANS FOR SOLVING THE PROBLEMS

The present inventors diligently made researches in order to solve the above-described problems and found that the surface of stainless steel can be adequately roughened in an efficient manner with few steps by using a composition having a specific composition, and thus the present invention was achieved.

Specifically, the present invention is defined in the appended set of claims.

### ADVANTAGEOUS EFFECT OF THE INVENTION

According to the present invention, the surface of stainless steel can be adequately roughened by an efficient method with a small number of steps.

### BRIEF DESCRIPTION OF THE DRAWINGS

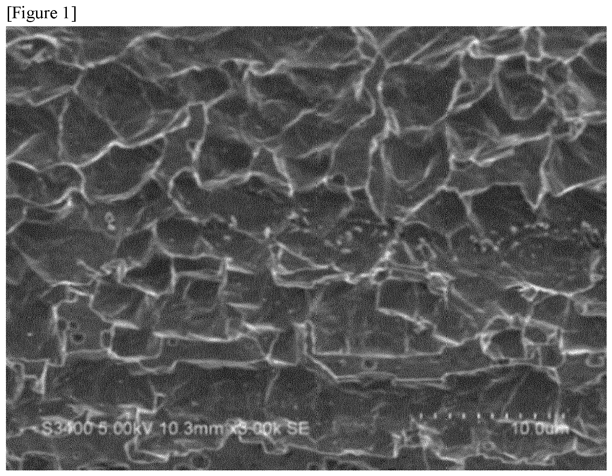

FIG. 1 is a scanning electron microscope (SEM) image showing the surface of stainless steel after the roughening treatment in Example.

### EMBODIMENTS FOR CARRYING OUT THE INVENTION

### [1. Composition]

The composition used in the present invention is suitably used for the roughening treatment of metal surfaces, that is, the treatment in which metal surfaces are roughened to increase roughness. Examples of materials to be subjected to the roughening treatment using the composition used in the present invention include various metals and alloys, and preferred examples thereof include various stainless steels which will be described in detail later.

The composition used in the present invention comprises 0.1 to 25% by mass of at least one selected from the group consisting of persulfuric acid and a persulfuric acid salt and 1 to 30% by mass of halide ions with reference to the total amount of the composition. The composition is preferably water soluble, and is particularly preferably an aqueous composition which comprises water, in particular, ion-exchanged water or ultrapure water in addition to the above-described components.

Hereinafter, respective components of the composition used in the present invention (preferably an aqueous composition) will be described.

### 1-1. Persulfuric acid and persulfuric acid salt

The composition used in the present invention comprises at least one selected from the group consisting of persulfuric acid and a persulfuric acid salt. Specifically, in the composition, only one of persulfuric acid and the persulfuric acid salt may be used, and alternatively, persulfuric acid and one type of a persulfuric acid salt may be used. Moreover, regarding the persulfuric acid salt, one type of a persulfuric acid salt may be used solely, or two or more types of persulfuric acid salts may be used in combination.

As persulfuric acid (H₂SO₅), one that is produced by a publicly-known technique, for example, by reacting sulfuric acid or chlorosulfuric acid with a peroxide, can be used.

As the persulfuric acid salt, for example, one that is produced by adding a compound containing a predetermined counterion to persulfuric acid can be used. Further, it can be obtained by reacting an electrolyte of ammonium sulfate with sodium hydroxide as described in Japanese Patent No. 3778238.

The persulfuric acid salt is not particularly limited as long as it is a salt of persulfuric acid, and examples thereof include a metal salt of persulfuric acid and a salt of another inorganic compound. Among them, a metal salt of persulfuric acid is preferred.

As the metal salt of persulfuric acid, an alkali metal salt and an alkaline earth metal salt are preferred, and an alkali metal salt is more preferred. More preferred specific examples thereof include sodium persulfate, potassium persulfate and potassium hydrogen monopersulfate composite salt (2KHSO₅·KHSO₄·K₂SO₄; Oxone), and among them, sodium persulfate and potassium persulfate are even more preferred, and sodium persulfate is particularly preferred.

Examples of the salt of the inorganic compound of persulfuric acid include ammonium persulfate.

In this specification, the above-described persulfuric acid and persulfuric acid salt are sometimes collectively referred to as a persulfuric acid component.

The content of the persulfuric acid component in the composition used in the present invention (the total content of at least one selected from the group consisting of persulfuric acid and a persulfuric acid salt) is 0.1 to 25% by mass, preferably 1.0 to 25% by mass, more preferably 1.0 to 20% by mass or 2.0 to 22.5% by mass, even more preferably 2.0 to 15% by mass or 2.5 to 20% by mass, still more preferably 3.0 to 16% by mass, and particularly preferably 4.0 to 12% by mass with reference to the total amount of the composition. Further, the lower limit of the concentration of the persulfuric acid component contained in the composition may be, for example, 1.0% by mass, 1.5% by mass, 2.0% by mass, 2.5% by mass, 3.0% by mass, 3.5% by mass, 4.0% by mass, 4.5% by mass, 5.0% by mass or the like, and the upper limit of the concentration of the persulfuric acid component contained in the composition may be, for example, 22.5% by mass, 21% by mass, 20% by mass, 19% by mass, 18% by mass, 17% by mass, 16% by mass, 15% by mass, 14% by mass, 13% by mass, 12% by mass or the like.

When the content (concentration) of the persulfuric acid component, in particular, the content (concentration) of sodium persulfate in the composition is within the above-described range, the solubility of the persulfuric acid component is satisfactory and the efficiency of the roughening treatment can be improved.

Note that the range of the content of the persulfuric acid component may include the above-described upper limit and lower limit (i.e., a range of the upper limit or less or the lower limit or more), and the range may exclude the upper limit and lower limit (i.e., a range of less than the upper limit or more than the lower limit). The same applies to ranges other than the range of the content of the persulfuric acid component.

Thus, in the composition used in the present invention, the persulfuric acid component is used, but a peroxide that is different from the persulfuric acid component (a compound having a -O-O- structure in the molecule; in this regard, O represents an oxygen atom) can be used together with the persulfuric acid component. Specific examples of the peroxide that is different from the persulfuric acid component include peracetic acid, a peracetic acid salt, percarbonic acid, a percarbonic acid salt, perbenzoic acid, a perbenzoic acid salt and meta-chloroperbenzoic acid.

### 1-2. Halide ions (halogen ions)

The type of the halide ions contained in the composition used in the present invention are chloride ions from the viewpoint of ease of handling, efficiency of the roughening treatment and economic efficiency.

The compound for supplying the halide ions is not particularly limited, and examples thereof include hydrogen halide, a halide of an alkali metal such as sodium halide and potassium halide, a halide of an alkaline earth metal such as calcium halide, ammonium halide and copper halide. Among them, from the viewpoint of more effective and secure exertion of the effects of the present invention, hydrogen halide or a halide of an alkali metal is preferred, and at least one selected from the group consisting of hydrochloric acid (hydrogen chloride), sodium chloride and potassium chloride is more preferred. These materials may be used solely, or two or more of them may be used in combination.

The concentration of the halide ions contained in the composition is 1 to 30% by mass, but it is preferably 2.0 to 25% by mass, more preferably 2.0 to 20% by mass or 3.0 to 20% by mass, particularly preferably 4.0 to 18% by mass or 5.0 to 15% by mass, and even more preferably 5.0 to 17% by mass, 7.0 to 15% by mass, 7.0 to 12% by mass, 8.0 to 15% by mass or 8.0 to 12% by mass. Note that the range of the content of the halide ions may include the above-described upper limit and lower limit (i.e., a range of the upper limit or less or the lower limit or more), and the range may exclude the upper limit and lower limit (i.e., a range of less than the upper limit or more than the lower limit).

Further, the lower limit of the concentration of the halide ions contained in the composition may be, for example, 1.5% by mass, 2.0% by mass, 3.0% by mass, 4.0% by mass, 5.0% by mass, 6.0% by mass, 7.0% by mass, 8.0% by mass, 9.0% by mass or the like, and the upper limit of the concentration of the halide ions contained in the composition may be, for example, 27% by mass, 25% by mass, 22% by mass, 20% by mass, 19% by mass, 18% by mass, 17% by mass, 16% by mass, 15% by mass, 14% by mass, 13% by mass, 12% by mass or the like. When the content (concentration) of the halide ions in the composition is within the above-described range, the efficiency of the roughening treatment can be improved.

### 1-3. Water

The composition used in the present invention may comprise water and preferably comprises water. Water is not particularly limited, but is preferably water from which metal ions, organic impurities, particles, etc. have been removed by distillation, ion exchange treatment, filtering treatment, adsorption treatment or the like. Pure water is more preferred, and ultrapure water is particularly preferred.

The content of water in the composition used in the present invention is not particularly limited, but is preferably 45 to 98.9% by mass, more preferably 55 to 97% by mass, even more preferably 65 to 95% by mass, and particularly preferably 75 to 90% by mass with reference to the total amount of the composition.

Note that the composition used in the present invention is preferably a solution, and it is preferred that the composition does not contain a component that is insoluble in the composition as the solution, for example, solid particles such as abrasive particles.

### 1-4. Other active components in the composition

To the composition used in the present invention, an active component other than the above-described persulfuric acid component, peroxide and halide ions is added. As a component that can cause a substitution reaction with respect to nickel and chrome that are components of stainless steel, copper ions are added to the composition. The type of the copper ion source is not particularly limited as long as it is a copper compound that can supply copper ions in the composition.

Examples of the copper compound that can supply copper ions include copper sulfate such as copper (II) sulfate, copper chloride such as copper (II) chloride, copper (II) oxide, copper phosphate, copper acetate, copper formate and copper nitrate, which may be an anhydride or a hydrate (e.g., a pentahydrate). Among them, copper sulfate or copper chloride is preferred, copper (II) sulfate or copper (II) chloride is more preferred, and copper (II) sulfate is even more preferred. These materials may be used solely, or two or more of them may be used in combination.

The concentration of the copper ions contained in the composition is 0.25 to 40% by mass, but it is preferably 1.0 to 30% by mass, more preferably 3.0 to 25% by mass, and particularly preferably 5.0 to 20% by mass.

Note that the copper compound may overlap with the above-described compound for supplying the halide ions. For example, when using a copper halide as a source of the copper ions, said copper halide also corresponds to the above-described halide ion source.

### 1-5. Additive contained in composition

The composition used in the present invention may comprise an additive as a component other than the above-described active components, such as persulfuric acid component and halide ions within a range in which the effects of the present invention are exerted.

Examples of the additive include a heterocyclic nitrogen compound (azole-based compound) and an organic solvent. These additives may be used solely, or two or more of them may be used in combination. Examples of the additive also include a surfactant and a pH adjuster, but it is better that these materials are not contained in the composition used in the present invention.

The concentration of the additive that may be contained in the composition is preferably 10% by mass or less, more preferably 5.0% by mass or less, even more preferably 2.0% by mass or less, and particularly preferably 1.0% by mass or less based on the total amount of the composition.

1-6. Functions and characteristics of composition

It is considered that the composition comprising the above-described components functions as described below in the roughening treatment of the surface of stainless steel.

The halide ions play a role to cause pitting corrosion of an oxide film usually formed on the surface of stainless steel.

The persulfuric acid component plays a role to oxidize and ionize a metal component of stainless steel in an acidic aqueous solution to cause a corrosion reaction. When the corrosion reaction occurs irregularly on stainless steel, a roughened form is obtained. Further, it is considered that a peroxide other than the persulfuric acid component, for example, peracetic acid can play the same role as that of the persulfuric acid component.

The composition used in the present invention is prepared by adding the above-described persulfuric acid component, component for supplying the halide ions and water, and according to need, other components and stirring the mixture until it becomes homogeneous.

Characteristics of the composition are not particularly limited, but the pH value is preferably -1.5 to 4.0, more preferably -1.0 to 3.0, even more preferably -0.75 to 2.5, and particularly preferably -0.5 to 2.0. The pH value of the composition is for example, less than 1.0. The pH value can be measured by the method described in the Examples.

### [2. Method for roughening stainless steel]

The composition is in particular used in a method for roughening stainless steel. In the method for roughening stainless steel of the present invention, a roughening step in which a roughening treatment of the surface of stainless steel is performed by using the above-described composition is carried out.

Specifically, the roughening treatment carried out in the present invention includes a step in which the above-described composition is brought into contact with the stainless steel. The method for bringing the composition into contact with the stainless steel is not particularly limited. For example, a method in which a stainless steel subjected to the treatment is immersed in the composition used in the present invention, a method in which the composition used in the present invention is dropped on a stainless steel subjected to the treatment (wafer spin process), a method in which the composition used in the present invention is sprayed on a stainless steel subjected to the treatment (spray treatment) or the like can be employed. In the present invention, any of such methods may be employed. Examples of such methods include a method in which the composition used in the present invention is sprayed on a processed stainless steel having a specific shape to obtain a roughened stainless steel, and a method in which: a dropping apparatus, spraying apparatus or immersion apparatus for the composition used in the present invention is placed between rolls for a stainless steel foil; using a roll-to-roll technique, an untreated stainless steel foil is spread from a roll around which it is wound and moved; during the movement, the stainless steel foil is passed through an area near the above-described apparatus to supply the composition; and the roughened stainless steel foil is wound around another roll, thereby obtaining it.

In the roughening step, the temperature for the roughening treatment is preferably 20 to 60°C, more preferably 25 to 55°C, and particularly preferably 30 to 50°C. Thus, the method for roughening stainless steel is excellent on the point that roughening of the surface of stainless steel is progressed even if the temperature is not so high, for example, even at 20 to 30°C. In this regard, the temperature for the roughening treatment means a temperature at which the composition is brought into contact with the surface of stainless steel, in particular, a solution temperature of the composition to be brought into contact with the surface of stainless steel.

Further, in the roughening step, the time for the roughening treatment is preferably 30 seconds to 180 seconds, more preferably 30 seconds to 120 seconds, even more preferably 40 seconds to 100 seconds, and particularly preferably 50 seconds to 90 seconds. Thus, the method for roughening stainless steel is excellent on the point that roughening of stainless steel is progressed even if the time is not so long. In this regard, the time for the roughening treatment means the time during which the composition is brought into contact with the surface of stainless steel. For example, it is the time during which stainless steel is immersed in the composition, or the time from when the composition is sprayed on the surface of stainless steel till when the composition is removed with water or the like.

According to the method for roughening stainless steel, the maximum height (Rz) of the surface of stainless steel subjected to the roughening treatment (in this specification, it is also referred to as a "roughened stainless steel", and a stainless steel foil (film or sheet) subjected to the roughening treatment is also included in the stainless steel) can be set to be 1.0 µm or more, for example, 1.5 µm or more, or 2.0 µm or more. According to the method for roughening stainless steel, the maximum height (Rz) of the surface of stainless steel can be set to be preferably 3.0 µm or more, or 4.0 µm or more, more preferably 4.5 µm or more, even more preferably 5.0 µm or more, and particularly preferably 5.5 µm or more.

Further, the upper limit of the maximum height (Rz) of the surface of stainless steel subjected to the roughening treatment is not particularly limited, but for example, it is 10.0 µm or less, and it may be 7.0 µm or less, or 5.0 µm or less.

Note that the maximum height (Rz) of the surface of stainless steel not subjected to the roughening treatment (untreated stainless steel) is not particularly limited, but for example, it is 0.1 to 2.0 µm, 0.2 to 2.0 µm, 0.4 to 2.0 µm, 1.0 to 1.5 µm, or the like.

According to the method for roughening stainless steel, a surface of the roughened stainless steel can have a value of the maximum height (Rz) which is at least 1.0 µm larger than the value of the maximum height (Rz) of the surface of untreated stainless steel, it is preferably at least 1.5 µm larger or 2.0 µm larger than untreated stainless steel, and more preferably at least 3.0 µm larger than untreated stainless steel.

According to the method for roughening stainless steel, the arithmetic average roughness (Ra) of the surface of the roughened stainless steel can be set to be 0.1 µm or more, for example, 0.2 µm or more. According to the method for roughening stainless steel, the arithmetic average roughness (Ra) of the surface of the roughened stainless steel can be set to be preferably 0.3 µm or more, more preferably 0.4 µm or more, even more preferably 0.6 µm or more, and particularly preferably 0.8 µm or more.

Further, the upper limit of the arithmetic average roughness (Ra) of the surface of the roughened stainless steel is not particularly limited, but for example, it is 2.0 µm or less, and it may be 1.5 µm or less, or 1.0 µm or less.

Note that the arithmetic average roughness (Ra) of untreated stainless steel is not particularly limited, but for example, it is 0.01 to 0.3 µm or 0.05 to 0.3 µm .

According to the method for roughening stainless steel, the arithmetic average roughness (Ra) of the surface of the roughened stainless steel can be set to be at least 0.05 µm larger than the arithmetic average roughness (Ra) of the surface of untreated stainless steel, and it is preferably at least 0.1 µm or 0.2 µm, and more preferably at least 0.3 µm larger than untreated stainless steel.

The above-described maximum height (Rz) and arithmetic average roughness (Ra) are calculated in accordance with JIS B 0601-2001. The apparatus to be used for the measurement is not particularly limited, but for example, a laser microscope can be used.

The etching rate of stainless steel in the roughening treatment is not particularly limited, but for example, it is 0.1 µm/min or higher, and it is preferably 0.5 µm/min or higher, more preferably 0.7 µm/min or higher, even more preferably 1.0 µm/min or higher, still more preferably 1.2 µm/min or higher, and particularly preferably 1.4 µm/min or higher.

According to the above-described method for roughening stainless steel, a stainless steel in which the surface roughness is increased can be obtained only by a substantially one-step treatment, that is, the roughening treatment in which the composition used in the present invention is brought into contact with the surface of stainless steel to be treated, or according to need, additionally performing washing adequately (e.g., washing with water). Further, since the treatment conditions in the roughening treatment are moderate and the required time is short as described above, according to the present invention, the roughening treatment of stainless steel can be efficiently carried out.

According to the present invention which does not require a treatment such as wet peening that is for fining of a crystal forming the surface of stainless steel, the surface of stainless steel can be roughened rapidly by a more convenient method.

### [3. Stainless steel]

The type of stainless steel to be subjected to the roughening treatment using the composition used in the present invention is not particularly limited, and examples thereof include: a chrome-nickel stainless steel including SUS304, SUS316, SUS321, SUS347 and SUS329J1; a martensite stainless steel (chrome stainless steel) including SUS403, SUS410, SUS420J1, SUS420J2, SUS440A, SUS440B and SUS440C; a ferritic stainless steel (chrome stainless steel) including SUS405, SUS430, SUS434, SUS444, SUS447 and SUSXM27; and a precipitation hardening type (chrome-nickel stainless steel) including SUS630, SUS631 and SUH660, which are defined by JISG4305.

Further, the size, thickness and shape of stainless steel to be subjected to the roughening treatment are not particularly limited, and for example, a stainless steel foil can be subjected to the roughening treatment. The thickness of the stainless steel foil to be subjected to the roughening treatment is not particularly limited, but for example, it is 1 µm to 500 µm, and it is preferably 10 µm to 100 µm.

By using the composition used in the present invention, surfaces of a wide variety of stainless steels can be roughened as described above. Further, by using the composition used in the present invention, a solid stainless steel such as SUS444 which cannot be roughened by an aqueous composition containing hydrogen peroxide, hydrochloric acid, etc. as active components can also be roughened.

Further, as described above, the maximum height (Rz) of the surface of stainless steel subjected to the roughening treatment is, for example, 0.5 µm or more, and it is preferably 1.0 µm or more, more preferably 1.5 µm or more, even more preferably 2.0 µm or more, and particularly preferably 2.4 µm or more.

The upper limit of the maximum height (Rz) of the surface of stainless steel subjected to the roughening treatment is not particularly limited, but for example, it is 10.0 µm or less, and it may be 7.0 µm or less, 5.0 µm or less, or 4.0 µm or less.

The arithmetic average roughness (Ra) of the surface of the roughened stainless steel is, for example, 0.1 µm or more, and it is preferably 0.15 µm or more, more preferably 0.2 µm or more, even more preferably 0.3 µm or more, and particularly preferably 0.4 µm or more.

The upper limit of the arithmetic average roughness (Ra) of the surface of the roughened stainless steel is not particularly limited, but for example, it is 0.70 µm or less, and it may be 0.50 µm or less.

### [4. Method for producing stainless steel]

The method for producing stainless steel has at least the above-described roughening step. According to the method for producing stainless steel, a stainless steel whose surface is rougher than that before the roughening treatment, i.e., a stainless steel having a surface in which the roughness is increased when compared to that of the surface before the treatment, can be produced.

The stainless steel to be used in the method for producing stainless steel is as described in [3. Stainless steel] above.

The maximum height (Rz) and arithmetic average roughness (Ra) of the surface of stainless steel subjected to the roughening treatment obtained by the method for producing stainless steel are as described in [2. Method for roughening stainless steel] or [3. Stainless steel] above.

The stainless steel subjected to the roughening treatment obtained by the method for producing stainless steel can be used for applications including a current collector foil for batteries such as solid state batteries and lithium ion batteries, a solar cell substrate, a flexible substrate for electronic devices, a substrate for power storage devices, a carrier for an exhaust gas purification catalyst or the like, an electromagnetic wave shielding member, a heat dissipation member, etc. The stainless steel foil subjected to the roughening treatment obtained by the method for producing stainless steel is suitably used, for example, as a current collector foil for batteries.

### EXAMPLES

Hereinafter, the present invention will be described in more detail based on working examples, but the present invention is not limited thereto.

### (Measurement of surface roughness of stainless steel foil)

With respect to a stainless steel foil as a raw material and the surface-treated foils obtained in the Examples and Comparative Examples, the maximum height (Rz) and arithmetic average roughness (Ra) in accordance with JIS B 0601-2001 were measured by using a laser microscope (manufactured by KEYENCE CORPORATION, product name: VK-X250).

### (Observation of surface of stainless steel foil)

With respect to the surface-treated foils obtained in the Examples and Comparative Examples, the surface shape was observed by using a scanning electron microscope (manufactured by Hitachi High-Technologies Corporation, product name: S-3400N).

### (Measurement of pH value)

The pH value of each composition in the Examples and Comparative Examples was measured by using a pH meter (pH meter F-52 manufactured by HORIBA, Ltd.) at 25°C.

### (Measurement of etching rate (E.R.))

With respect to the surface-treated foils obtained in the Examples and Comparative Examples, the difference in mass (D) of the stainless steel foil before and after the treatment with the composition was divided by the area S of the used stainless steel foil (area of the treatment with the composition), the density (ρ) of the stainless steel foil and the treatment time (T) to obtain the value of E.R. (µm/min).

This is as expressed by formula (1) below. Note that the unit of the value of E.R. directly calculated from formula (1) is "cm/min", and that the values with the unit of "µm/min" obtained by conversion are shown in Table 1, etc. below. $\frac{Difference in mass \left(D\right) of stainless steel foil before and after treatment \left(g\right)}{\begin{matrix}Density \left(ρ\right) of stainless steel foil \left(g/{cm}^{3}\right) \times Area \left(S\right) of stainless steel foil \left({cm}^{2}\right) \\ \times Treatment time \left(T\right) \left(min\right)\end{matrix}}$ (1).

### Example 1 (Reference Example)

A stainless steel foil made of SUS444 having a thickness of 20 µm, a longitudinal length of 30 mm and a lateral length of 30 mm was prepared. Rz and Ra of the stainless steel foil were measured according to "Measurement of surface roughness of stainless steel foil" above. Rz was 0.48 µm and Ra was 0.07 µm.

To 129 ml of ultrapure water, 7% by mass (14 g) of sodium persulfate and 28% by mass (57 g) of 35 wt% aqueous solution of hydrochloric acid were added to prepare a composition. The concentration of halide ions (Cl⁻) derived from hydrochloric acid was 10% by mass with reference to the total amount of the composition.

Firstly, the stainless steel foil was immersed in the above-described composition at a solution temperature of 45°C for 60 seconds. Next, the stainless steel foil after immersion was adequately washed with ultrapure water and then adequately dried to obtain a surface-treated foil. The obtained surface-treated foil was observed according to "Observation of surface of stainless steel foil" above. A microscopic image thereof is shown in Figure 1. Further, the maximum height of the surface of the obtained surface-treated foil was measured according to "Measurement of surface roughness of stainless steel foil" above. The value of Rz was 2.41 µm and that of Ra was 0.46 µm. The etching rate was 1.05 µm/min.

### [Examples 2-5] (Reference Examples)

The surface of a stainless steel foil was treated in a manner similar to that in Example 1, except that the concentrations of sodium persulfate and chloride ions (Cl⁻) in the composition were changed as shown in Table 1 below, and the surface roughness and the etching rate were measured. The values of Rz, Ra and the etching rate are as described in Table 1.

### [Example 6] (Reference Example)

The surface of a stainless steel foil was treated in a manner similar to that in Example 1, except that the stainless steel foil to be subjected to the roughening treatment was changed as shown in Table 1 below, and the surface roughness and the etching rate were measured. The values of Rz, Ra and the etching rate are as described in Table 1.

### Comparative Example 1

A stainless steel foil made of SUS444 having a thickness of 20 µm, a longitudinal length of 30 mm and a lateral length of 30 mm was prepared.

To 143 ml of ultrapure water, 28% by mass (57 g) of 35 wt% aqueous solution of hydrochloric acid was added to prepare a composition.

Firstly, the stainless steel foil was immersed in the composition at a solution temperature of 45°C for 60 seconds. Next, the stainless steel foil after immersion was adequately washed with ultrapure water and then adequately dried to obtain a surface-treated foil. Further, the maximum height of the surface of the obtained surface-treated foil was measured according to "Measurement of surface roughness of stainless steel foil" above. No roughened state of the surface was seen, and the values of Ra and Rz were not changed from those before the treatment.

### Comparative Example 2

A stainless steel foil made of SUS444 having a thickness of 20 µm, a longitudinal length of 30 mm and a lateral length of 30 mm was prepared.

To 186 ml of ultrapure water, 7% by mass (14 g) of sodium persulfate was added to prepare a composition.

Firstly, the stainless steel foil was immersed in the composition at a solution temperature of 45°C for 60 seconds. Next, the stainless steel foil after immersion was adequately washed with ultrapure water and then adequately dried to obtain a surface-treated foil. Further, the maximum height of the surface of the obtained surface-treated foil was measured according to "Measurement of surface roughness of stainless steel foil" above. No roughened state of the surface was seen, and the values of Ra and Rz were not changed from those before the treatment.

### [Comparative Example 3]

The surface of a stainless steel foil was treated in a manner similar to that in the above-described comparative example, except that the concentrations of sodium persulfate and chloride ions (Cl⁻) in the composition were changed as shown in Table 1 below.

As a result, no roughened state of the surface was seen, and the values of Ra and Rz were not changed from those before the treatment.

**[Table 1]**

| | **Composition (% by mass)** | | | **Roughening treatment** | | | | | | |
|---|---|---|---|---|---|---|---|---|---|---|
| | | | | **Treatment solution pH** | **Stainless steel** | **Ra (µm)** | | **Rz (µm)** | | **Etching rate** |
| | **Sodium persulfate** | **Halogen ions** | **Pure water** | | | **Before treatment** | **After treatment** | **Before treatment** | **After treatment** | **µm/min** |
| **Example 1** | **7.0** | **10** | **Remainder** | **-0.33** | **SUS444** | **0.07** | **0.46** | **0.48** | **2.41** | **1.05** |
| **Example 2** | **3.0** | **10** | **Remainder** | **less than 1** | **SUS444** | **0.07** | **0.38** | **0.48** | **1.63** | **0.43** |
| **Example 3** | **16** | **10** | **Remainder** | **less than 1** | **SUS444** | **0.07** | **0.41** | **0.48** | **2.64** | **1.60** |
| **Example 4** | **7.0** | **8.0** | **Remainder** | **less than 1** | **SUS444** | **0.07** | **0.42** | **0.48** | **1.96** | **0.64** |
| **Example 5** | **7.0** | **15** | **Remainder** | **less than 1** | **SUS444** | **0.07** | **0.41** | **0.48** | **2.26** | **1.00** |
| **Example 6** | **7.0** | **10** | **Remainder** | **less than 1** | **SUS304** | **0.04** | **0.70** | **0.28** | **4.04** | **1.53** |
| **Comparative Example 1** | **-** | **10** | **Remainder** | **0.19** | **SUS444** | **0.07** | **0.07** | **0.48** | **0.48** | **-** |
| **Comparative Example 2** | **7.0** | **-** | **Remainder** | **4.06** | **SUS444** | **0.07** | **0.07** | **0.48** | **0.48** | **-** |
| **Comparative Example 3** | **0.05** | **0.5** | **Remainder** | **1.40** | **SUS444** | **0.07** | **0.07** | **0.48** | **0.48** | **-** |

### Examples 1 to 6 are Reference Examples.

As is clear from Table 1, stainless steel can be efficiently roughened by the aqueous composition in which the persulfuric acid component and the halide ions whose contents are within predetermined ranges are used in combination.

### INDUSTRIAL APPLICABILITY

According to the present invention, by using a composition having a specific composition, the surface of stainless steel can be adequately roughened in an efficient manner with few steps in a short time. Further, when using the stainless steel whose surface is roughened for a current collector foil for batteries, a case for automobile components or the like, a dielectric material and an organic substance can be effectively adhered and held. Further, the stainless steel whose surface is roughened can also be suitably used for a heat dissipation member.

Further, according to the present invention, efficient roughening is realized by a composition containing relatively fewer types of active components, and therefore the cost for treating stainless can be reduced.

Accordingly, the present invention is industrially applicable in the field of the roughening treatment of the surface of a member of a material, for example, stainless steel to be used in the above-described products.

## Claims

1. Use of a composition for roughening the surface of stainless steel, wherein the composition comprises:
0.1 to 25% by mass of at least one selected from the group consisting of persulfuric acid and a persulfuric acid salt with reference to the total amount of the composition;
1 to 30% by mass of halide ions with reference to the total amount of the composition, wherein the halide ions are chloride ions; and
copper ions.

2. The use according to claim 1, wherein the persulfuric acid salt includes an alkali metal salt of persulfuric acid.

3. The use according to claim 2, wherein the alkali metal salt of persulfuric acid includes at least one of sodium persulfate and potassium persulfate.

4. The use according to any one of claims 1 to 3, wherein the composition comprises at least one selected from the group consisting of hydrochloric acid, sodium chloride and potassium chloride as a compound for supplying the halide ions.

5. The use according to any one of claims 1 to 4, wherein the composition further comprises water and has a pH value of -1.5 to 4.0.

6. The use according to any one of claims 1 to 5, which includes a roughening step in which a roughening treatment of the surface of stainless steel is performed by using the composition.

7. The use according to claim 6, wherein the temperature for the roughening treatment is 20 to 60°C.

8. The use according to claim 6 or 7, wherein the time for the roughening treatment is 30 seconds to 180 seconds.

9. The use according to any one of claims 6 to 8, wherein the surface of stainless steel subjected to the roughening treatment has a maximum height (Rz) that is defined by JIS B 0601-2001 of 1.0 µm or more.

10. The use according to any one of claims 6 to 9, wherein the value of the maximum height (Rz) that is defined by JIS B 0601-2001 of the surface of stainless steel subjected to the roughening treatment is at least 0.5 µm larger than the value of the maximum height (Rz) of the surface of untreated stainless steel.

11. The use according to any one of claims 6 to 10, wherein the surface of stainless steel subjected to the roughening treatment has an arithmetic average roughness (Ra) that is defined by JIS B 0601-2001 of 0.1 µm or more.

12. The use according to any one of claims 6 to 11, wherein the arithmetic average roughness (Ra) that is defined by JIS B 0601-2001 of the surface of stainless steel subjected to the roughening treatment is at least 0.05 µm larger than the arithmetic average roughness (Ra) of the surface of untreated stainless steel.

13. The use according to any one of claims 6 to 12, wherein the etching rate of said stainless steel in the roughening treatment is 0.1 µm/min or higher.

14. The use according to any one of claims 1 to 13, wherein said stainless steel is at least one of:
a chrome-nickel stainless steel including SUS304, SUS316, SUS321, SUS347 and SUS329J1;
a martensite stainless steel (chrome stainless steel) including SUS403, SUS410, SUS420J1, SUS420J2, SUS440A, SUS440B and SUS440C;
a ferritic stainless steel (chrome stainless steel) including SUS405, SUS430, SUS434, SUS444, SUS447 and SUSXM27; and
a precipitation hardening type (chrome-nickel stainless steel) including SUS630, SUS631 and SUH660, which are defined by JISG4305.

## Patentansprüche

1. Verwendung einer Zusammensetzung zum Aufrauen der Oberfläche von Edelstahl, wobei die Zusammensetzung umfasst:
0,1 bis 25 Masseprozent mindestens eines Bestandteils, ausgewählt aus der Gruppe, bestehend aus Perschwefelsäure und einem Perschwefelsäuresalz, bezogen auf die Gesamtmenge der Zusammensetzung;
1 bis 30 Masseprozent Halogenidionen, bezogen auf die Gesamtmenge der Zusammensetzung, wobei die Halogenidionen Chloridionen sind; und
Kupferionen.

2. Verwendung nach Anspruch 1, wobei das Perschwefelsäuresalz ein Alkalimetallsalz der Perschwefelsäure umfasst.

3. Verwendung nach Anspruch 2, wobei das Alkalimetallsalz der Perschwefelsäure mindestens eines von Natriumpersulfat und Kaliumpersulfat ist.

4. Verwendung nach einem der Ansprüche 1 bis 3, wobei die Zusammensetzung mindestens eine, ausgewählt aus der Gruppe, bestehend aus Salzsäure, Natriumchlorid und Kaliumchlorid, als eine Verbindung zum Zuführen der Halogenidionen umfasst.

5. Verwendung nach einem der Ansprüche 1 bis 4, wobei die Zusammensetzung weiter Wasser umfasst und einen pH-Wert von -1,5 bis 4,0 aufweist.

6. Verwendung nach einem der Ansprüche 1 bis 5, welche einen Aufrauschritt einschließt, worin eine Aufrauungsbehandlung der Oberfläche von Edelstahl unter Verwendung der Zusammensetzung durchgeführt wird.

7. Verwendung nach Anspruch 6, wobei die Temperatur für die Aufrauungsbehandlung 20 bis 60 °C beträgt.

8. Verwendung nach Anspruch 6 oder 7, wobei die Zeit für die Aufrauungsbehandlung 30 Sekunden bis 180 Sekunden beträgt.

9. Verwendung nach einem der Ansprüche 6 bis 8, wobei die Oberfläche des aufgerauten Edelstahls eine maximale Höhe (Rz), die durch JIS B 0601-2001 definiert wird, 1,0 µm oder mehr aufweist.

10. Verwendung nach einem der Ansprüche 6 bis 9, wobei der Wert der maximalen Höhe (Rz), die durch JIS B 0601-2001 definiert wird, für die Oberfläche des aufgerauten Edelstahls mindestens 0,5 µm größer ist als der Wert der maximalen Höhe (Rz) für die Oberfläche des unbehandelten Edelstahls.

11. Verwendung nach einem der Ansprüche 6 bis 10, wobei die Oberfläche des dem Aufrauen unterzogenen Edelstahls eine arithmetische mittlere Rauheit (Ra), die durch JIS B 0601-2001 definiert wird, 0,1 µm oder mehr beträgt.

12. Verwendung nach einem der Ansprüche 6 bis 11, wobei die arithmetische mittlere Rauheit (Ra), die durch JIS B 0601-2001 definiert ist, der Oberfläche des der Aufrauungsbehandlung unterzogenen Edelstahls mindestens 0,05 µm größer ist als die arithmetische mittlere Rauheit (Ra) der Oberfläche des unbehandelten Edelstahls.

13. Verwendung nach einem der Ansprüche 6 bis 12, wobei die Ätzrate des Edelstahls bei der Aufrauungsbehandlung 0,1 µm /min oder höher ist.

14. Verwendung nach einem der Ansprüche 1 bis 13, wobei der Edelstahl mindestens einer ist von:
ein Chrom-Nickel-Edelstahl einschließlich SUS304, SUS316, SUS321, SUS347 und SUS329J1;
ein martensitischer Edelstahl (Chrom-Edelstahl) einschließlich SUS403, SUS410, SUS420J1, SUS420J2, SUS440A, SUS440B und SUS440C;
ein ferritischer Edelstahl (Chrom-Edelstahl) einschließlich SUS405, SUS430, SUS434, SUS444, SUS447 und SUSXM27; und
ein ausscheidungshärtender Typ (Chrom-Nickel-Edelstahl) einschließlich SUS630, SUS631 und SUH660, die in JISG4305 definiert sind.

## Revendications

1. Utilisation d'une composition pour rugosifier la surface d'acier inoxydable, dans laquelle la composition comprend :
0,1 à 25 % en masse d'au moins un composé sélectionné parmi le groupe constitué de l'acide persulfurique et d'un sel d'acide persulfurique par rapport à la quantité totale de la composition ;
1 à 30 % en masse d'ions halogénure par rapport à la quantité totale de la composition, dans laquelle les ions halogénure sont des ions chlorure ; et
des ions cuivre.

2. Utilisation selon la revendication 1, dans laquelle le sel d'acide persulfurique inclut un sel de métal alcalin d'acide persulfurique.

3. Utilisation selon la revendication 2, dans laquelle le sel de métal alcalin d'acide persulfurique inclut au moins un composé parmi le persulfate de sodium et le persulfate de potassium.

4. Utilisation selon l'une quelconque des revendications 1 à 3, dans laquelle la composition comprend au moins un composé sélectionné parmi le groupe constitué de l'acide chlorhydrique, du chlorure de sodium et du chlorure de potassium en tant que composé pour fournir les ions halogénure.

5. Utilisation selon l'une quelconque des revendications 1 à 4, dans laquelle la composition comprend en outre de l'eau et a une valeur de pH de -1,5 à 4,0.

6. Utilisation selon l'une quelconque des revendications 1 à 5, qui inclut une étape de rugosification dans laquelle un traitement de rugosification de la surface d'acier inoxydable est réalisé en utilisant la composition.

7. Utilisation selon la revendication 6, dans laquelle la température pour le traitement de rugosification est de 20 à 60 °C.

8. Utilisation selon la revendication 6 ou 7, dans laquelle la durée pour le traitement de rugosification est de 30 secondes à 180 secondes.

9. Utilisation selon l'une quelconque des revendications 6 à 8, dans laquelle la surface d'acier inoxydable soumise au traitement de rugosification a une hauteur maximale (Rz) qui est définie par JIS B 0601-2001 de 1,0 µm ou plus.

10. Utilisation selon l'une quelconque des revendications 6 à 9, dans laquelle la valeur de la hauteur maximale (Rz) qui est définie par JIS B 0601-2001 de la surface d'acier inoxydable soumise au traitement de rugosification est d'au moins 0,5 µm supérieure à la valeur de la hauteur maximale (Rz) de la surface d'acier inoxydable non traité.

11. Utilisation selon l'une quelconque des revendications 6 à 10, dans laquelle la surface d'acier inoxydable soumise au traitement de rugosification a une rugosité moyenne arithmétique (Ra) qui est définie par JIS B 0601-2001 de 1,0 µm ou plus.

12. Utilisation selon l'une quelconque des revendications 6 à 11, dans laquelle la rugosité moyenne arithmétique (Ra) qui est définie par JIS B 0601-2001 de la surface d'acier inoxydable soumise au traitement de rugosification est d'au moins 0,05 µm supérieure à la rugosité moyenne arithmétique (Ra) de la surface d'acier inoxydable non traité.

13. Utilisation selon l'une quelconque des revendications 6 à 12, dans laquelle le taux de gravure dudit acier inoxydable dans le traitement de rugosification est de 0,1 µm/min ou supérieur.

14. Utilisation selon l'une quelconque des revendications 1 à 13, dans laquelle ledit acier inoxydable est au moins un acier inoxydable parmi :
un acier inoxydable de chrome-nickel incluant SUS304, SUS316, SUS321, SUS347 et SUS329J1 ;
un acier inoxydable de martensite (acier inoxydable de chrome) incluant SUS403, SUS410, SUS420J1, SUS420J2, SUS440A, SUS440B et SUS440C ;
un acier inoxydable ferritique (acide inoxydable de chrome) incluant SUS405, SUS430, SUS434, SUS444, SUS447 et SUSXM27 ; et
un (acide inoxydable de chrome-nickel) de type à durcissement structural incluant SUS630, SUS631 et SUH660, qui sont définis par JISG4305.
